# EUROPÄISCHE PATENTSCHRIFT

(11) **EP 3 267 158 B1**
(45) Veröffentlichungstag und Bekanntmachung des Hinweises auf die Patenterteilung: **08.05.2019**
(21) Anmeldenummer: 17001055.7
(22) Anmeldetag: 22.06.2017
(51) Int. Cl.: G01F 25/00, G01F 1/86, G01F 15/02, G01F 1/66

(54) **ULTRASCHALLZÄHLER ZUR ERFASSUNG EINER DURCHFLUSSMENGE EINES FLUIDS**
ULTRASONIC SENSOR FOR MEASURING A FLOW RATE OF A FLUID
COMPTEUR À ULTRASONS DESTINÉ À MESURER LE DÉBIT D'UN FLUIDE

(30) Priorität: 06.07.2016 DE 102016008302
(43) Veröffentlichungstag der Anmeldung: 10.01.2018
(73) Patentinhaber: Diehl Metering GmbH, 91522 Ansbach (DE)
(72) Erfinder: SONNENBERG, Hans-Michael, 91522 Ansbach (DE)
(74) Vertreter: Diehl Patentabteilung

(56) Entgegenhaltungen:
- EP-A1- 1 701 140
- EP-A1- 1 798 528
- EP-A1- 1 978 337
- EP-A1- 1 995 570
- EP-A2- 1 693 652
- WO-A1-2016/012024
- DE-A1-102010 033 858

## Beschreibung

Die Erfindung betrifft einen Ultraschallzähler zur Erfassung einer Durchflussmenge eines Fluids nach Anspruch 1.

Bei Ultraschallzählern zur Erfassung einer Durchflussmenge kann es für eine zuverlässige Durchflusserfassung besonders günstig sein, das Fluid geradlinig durch einen Messbereich zu führen und Ultraschallwandler zu nutzen, die in der Seitenwand angeordnet sind und beispielsweise im Wesentlichen senkrecht zur Strömungsrichtung des Fluids Ultraschallsignale einstrahlen bzw. empfangen. Zur Geschwindigkeitsmessung sollten die entsprechenden Ultraschallsignale jedoch im Wesentlichen parallel zu der Strömungsrichtung durch den Messbereich geführt werden. Daher sind typischerweise an beiden Seiten des Messbereichs Reflexionselemente vorgesehen, um entsprechende Ultraschallsignale umzulenken.

Nachteilig hierbei ist, dass die Reflexionselemente von der Strömung umströmt werden müssen, was zu Strömungswirbeln und Störungen führen kann, die sich nicht gleichmäßig über den gesamten Durchflussbereich bilden. Hierdurch kann das Messsignal des Ultraschallzählers potentiell verfälscht werden. Besonders problematisch kann hierbei das Umströmen des fluidauslassseitigen Reflexionselements sein. Die Strömung wird bei einem Auftreffen auf dieses Reflexionselement aufgeteilt, wobei Teilströmungen oberhalb, unterhalb und seitlich des Reflexionselements vorbeigeführt werden können. Jene Teilströmung, die oberhalb des Reflexionselements, das heißt zwischen dem Reflexionselement und dem Ultraschallwandler, geführt wird, beeinflusst die durch den Ultraschallwandler gesendeten bzw. empfangenen Ultraschallsignale. Die anderen Teilströmungen tun dies nicht. Daher wird das resultierende Messsignal in Abhängigkeit der Strömungsaufteilung beeinflusst.

Wäre die Aufteilung der Teilströmungen flussratenunabhängig oder würde sie langsam und kontinuierlich mit der Flussrate variieren, könnte eine entsprechende Variation im Rahmen der elektronischen Messdatenverarbeitung durch eine entsprechende Anpassung der Kennlinie ausgeglichen werden. Wird ein Messbereich, in dem der Strömungsquerschnitt eingeengt ist, bis relativ nahe an ein Reflexionselement herangeführt, können jedoch Staueffekte auftreten, die bereits bei relativ kleinen Durchflussänderungen zu einer schlagartigen Änderung der Strömungsaufteilung führen können. Dies kann zu Knickstellen in der Kennlinie des Ultraschallzählers führen, die beispielsweise zu Messfehlern von bis zu 3 % führen können. Entsprechende Effekte können elektronisch nicht zuverlässig kompensiert werden, da die Umschlagpunkte zwischen verschiedenen Strömungsaufteilungen sich beispielsweise temperaturabhängig oder alterungsabhängig ändern können.

Der Erfindung liegt daher die Aufgabe zugrunde, einen Ultraschallzähler anzugeben, der eine demgegenüber verbesserte Messgenauigkeit ermöglicht, indem insbesondere plötzlich auftretende Strömungsänderungen in dem Ultraschallzähler verhindert oder verringert werden.

Die Aufgabe wird erfindungsgemäß durch einen Ultraschallzähler der eingangs genannten Art gelöst, wobei der Übergangsbereich in Umfangsrichtung des Strömungskanals mehrere Umfangsabschnitte aufweist, in denen die Vergrößerung des Abstandes zwischen der Mittelgerade und der Seitenwand an in Strömungsrichtung betrachtet voneinander unterschiedlichen Erweiterungspositionen erfolgt oder beginnt.

Gegenüber einem üblichen Vorgehen, bei dem sich ein Strömungskanal vor dem Reflexionselement stufenweise oder kontinuierlich gleichmäßig über den gesamten Umfang des Strömungskanals öffnet, wie es zum Beispiel im Dokument DE 10 2010 033858 A1 offenbart ist, wird erfindungsgemäß vorgeschlagen, diese Öffnung des Strömungsquerschnitts in verschiedenen Umfangsabschnitten des Umfangs an verschiedenen Positionen in Strömungsrichtung zu beginnen bzw. durchzuführen. Da der Strömungskanal axial durchströmt wird, erfolgt die Abstandsvergrößerung für die Umfangsabschnitte an unterschiedlichen Axialpositionen. Die Erweiterungspositionen sind somit axial voneinander beabstandet und die Erweiterung des Strömungsquerschnitts erfolgt bzw. beginnt für die einzelnen Umfangsabschnitte in axial voneinander beabstandeten Ebenen. Der Abstand zwischen der Mittelgerade und der Seitenwand ändert sich jeweils in Radialrichtung des Strömungskanals. Dies ermöglicht es einerseits, die Fluidströmung bis zu einem Punkt, der relativ nahe am Reflexionselement liegt, zumindest in Teilbereichen ihres Umfangs zu führen, so dass unkontrollierbare Strömungsänderungen, die bei einer Strömung in Form eines Freistrahls auftreten können, vermieden werden können. Andererseits kann durch eine bereits früh in einigen Umfangsabschnitten erfolgende Erweiterung des Strömungsquerschnitts erreicht werden, dass die Fluidströmung das Reflexionselement besser umströmen kann, wodurch Staueffekte unterdrückt werden können. Dies führt zugleich vorteilhaft zu einem geringen Druckabfall am Messabschnitt. Durch eine entsprechende Wahl der Umfangsabschnitte und der Erweiterungspositionen kann zudem die Symmetrie der Fluidströmung zumindest teilweise gebrochen werden, womit eine im Wesentlichen stabile Strömungsaufteilung am Reflexionselement erreicht werden kann.

Der Übergangsabschnitt kann derart ausgebildet bzw. die Erweiterungspositionen der mehreren Unterabschnitte derart gewählt sein, dass eine Stauung von den das Reflexionselement umströmenden Teilströmen und daraus resultierende plötzliche Strömungsumschläge verringert oder verhindert werden können. Vorzugsweise ist der Ultraschallzähler derart ausgebildet, dass eine zu dem Reflexionselement geführte Strömung in mehrere Teilströmungen aufgeteilt wird, die an verschiedenen Seiten des Reflexionselements vorbeigeführt werden, wobei der Übergangsbereich derart ausgebildet ist, dass die Aufteilung einer einlaufenden Fluidströmung auf die Teilströmungen in einem bezüglich der Strömungsgeschwindigkeit vorgegebenen Betriebsbereich des Ultraschallzählers im Wesentlichen unabhängig von der Strömungsgeschwindigkeit des Fluids ist oder dass die Aufteilung sich kontinuierlich über wenigstens 10, 20, 30 oder 50 % des Betriebsbereichs ändert.

Das Fluid kann eine Flüssigkeit, insbesondere Wasser sein. Es ist jedoch auch möglich, dass das Fluid ein Gas ist. Das Reflexionselement kann ein insbesondere flächiges Element sein, das gewinkelt zur Strömungsrichtung steht. Die Reflexion in dem Messbereich bzw. aus dem Messbereich kann im Wesentlichen parallel zur Strömungsrichtung erfolgen. Es kann ein weiteres Reflexionselement zwischen dem Fluideinlass und dem Messabschnitt vorgesehen sein, durch das vorzugsweise Ultraschallsignal von einem an der Seitenwand des Strömungskanals angeordneten weiteren Ultraschallwandler in den Messbereich reflektierbar ist oder umgekehrt. Zur Durchflussmessung kann das Ultraschallsignal durch den Ultraschallwandler ausgesendet und durch den weiteren Ultraschallwandler empfangen werden oder umgekehrt.

Der Strömungskanal kann zumindest abschnittsweise durch ein Gehäuse des Ultraschallzählers gebildet werden. Es ist möglich, dass der Strömungskanal bzw. die den Strömungsquerschnitt des Strömungskanals begrenzenden Seitenwände in verschiedenen Abschnitten des Strömungskanals aus verschiedenen Komponenten gebildet sind. Beispielsweise kann ein fluideinlassseitiger und ein fluidauslassseitiger Abschnitt des Strömungskanals durch ein Gehäuse des Ultraschallzählers gebildet sein, in dem ein Messrohr aufgenommen ist, das die Seitenwände im Messbereich bildet. Es ist auch möglich, dass in Bereichen des Strömungskanals, insbesondere im Übergangsbereich, verschiedene Abschnitte der Seitenwand in Umfangsrichtung des Strömungskanals durch verschiedene Komponenten, beispielsweise durch das Gehäuse und das Messrohr, gebildet werden.

Der Strömungskanal bzw. das Gehäuse können vorzugsweise rohrförmig sein. Das Messrohr und/oder der Fluidkanal kann eine im Wesentlichen kreisförmige Querschnittsfläche aufweisen. Es sind jedoch auch andere Formen, beispielsweise mit in Umfangsrichtung gewellten Seitenwänden, möglich.

Die Mittelgerade kann derart definiert sein, dass sie durch den geometrischen Schwerpunkt des Strömungsquerschnitts in dem Messbereich verläuft. Der Strömungsquerschnitt kann im Messbereich konstant sein oder sich durch eine leicht konische Form in Strömungsrichtung derart verengen, dass der geometrische Schwerpunkt des Strömungsabschnitts konstant bleibt. Die Verengung kann zur kontinuierlichen Beschleunigung des Fluids dienen, wodurch eine Strömung stabilisiert werden kann.

Der Übergangsbereich kann als Stufendiffusor ausgebildet sein, in dem sich der Strömungsquerschnitt des Strömungskanals in mehreren in Strömungsrichtung aufeinander folgenden Stufen vergrößert, wobei die einzelnen Stufen durch die Vergrößerung des Abstands zwischen der Mittelgerade und der Seitenwand in jeweils einem Umfangsabschnitt oder in einem Teil der Umfangsabschnitte an einer jeweiligen der Erweiterungspositionen gebildet werden. Der Teil der Unterabschnitte umfasst vorzugsweise nicht alle Unterabschnitte.

Die Seitenwand in dem Messbereich kann durch ein Messrohr gebildet werden, dessen fluidauslassseitiges Ende in ein Auslassrohr mündet, in dem das Reflexionselement angeordnet ist, wobei die Seitenwand des Messrohres in den Umfangsabschnitten des Übergangsbereichs an der jeweiligen Erweiterungsposition endet, womit der Strömungsquerschnitt in den einzelnen Umfangsabschnitten jeweils vor der Erweiterungsposition durch die Seitenwand des Messrohres und nach der Erweiterungsposition durch die Seitenwand des Auslassrohres begrenzt ist. Das Auslassrohr kann vorzugsweise durch ein Gehäuse des Ultraschallzählers gebildet sein, das zudem ein Einlassrohr, in dem das weitere Reflexionselement angeordnet ist, und/oder den Fluideinlass und/oder den Fluidauslass ausbilden kann. Eine Ausbildung des Messbereichs durch ein Messrohr kann die Herstellung des Ultraschallzählers vereinfachen, insbesondere wenn das Gehäuse und/oder das Messrohr durch Kunststoffspritzguss hergestellt werden.

In dem erfindungsgemäßen Ultraschallzähler kann eine Außenfläche des fluidauslassseitigen Endes des Messrohrs von einer Innenfläche des Auslassrohres beabstandet sein. Das Messrohr endet in diesem Fall frei im Auslassrohr. Hierdurch wird eine Hinterspülung des Messrohres bzw. der Außenwand ermöglicht.

Die Erweiterungsposition eines oberen Umfangsabschnitts, der an der gleichen Seite des Strömungskanals wie der Ultraschallwandler angeordnet ist, kann in Strömungsrichtung stromabwärts von der Erweiterungsposition eines unteren Umfangsabschnitts, der dem oberen Umfangsabschnitt gegenüberliegend angeordnet ist, und/oder wenigstens eines seitlichen Umfangsabschnitts, der zwischen dem oberen und dem unteren Umfangsabschnitt angeordnet ist, gelegen sein. Dies führt dazu, dass die Erweiterung des Strömungsabschnitts, insbesondere durch ein Enden des Messrohrs, an der dem Ultraschallwandler zugewandten Seite des Strömungskanals zuletzt erfolgt, womit jener Teil der Fluidströmung, der zwischen dem Reflexionselementelement und dem Ultraschallwandler hindurchgeführt wird und somit die Messung beeinflusst, bis zu einer nah an dem Reflexionselement gelegenen Erweiterungsposition geführt werden kann. Hierdurch kann eine gut kontrollierbare Strömung, unter Vermeidung von Freistrahl-Effekten, erreicht werden, wodurch die Robustheit der Messung verbessert werden kann. Die Bezeichnungen der Unterabschnitte als oberer, unterer und seitlicher Umfangsabschnitt dienen ausschließlich der Bezeichnung der Position des entsprechenden Umfangsabschnitts bezüglich des Ultraschallwandlers und sind unabhängig von einer Anordnung des Ultraschallzählers im Raum.

Die Veränderung der Erweiterungsposition in Umfangsrichtung zwischen dem oberen und dem seitlichen und/oder zwischen dem seitlichen und dem unteren Umfangsabschnitt kann sprunghaft oder kontinuierlich über einen zwischen den jeweiligen Umfangsabschnitten angeordneten Übergangsabschnitt erfolgen. Bei einem kontinuierlichen Übergang kann es sich insbesondere um einen linearen Übergang handeln, womit im Übergangsbereich eine sägezahnartige Geometrie in Umfangsrichtung entsteht. Werden die Abstandsänderungen, wie vorangehend erläutert, durch ein jeweiliges Enden eines Messrohres an der Erweiterungsposition erreicht, so kann das fluidauslassseitige Ende des Messrohres zumindest abschnittsweise eine sägezahnartige Geometrie aufweisen.

Die Erweiterungsposition genau eines seitlichen Umfangsabschnitts kann stromaufwärts von der Erweiterungsposition des oberen Umfangabschnitts gelegen sein. Beispielsweise kann sich der Strömungskanal in Strömungsrichtung betrachtet zunächst ausschließlich nach links oder rechts weiten bzw. ein Messrohr kann ausschließlich links oder rechts eine Ausnehmung aufweisen, so dass ab der Erweiterungsposition, an der diese Ausnehmung beginnt, die Seitenwand durch ein Gehäuse gebildet oder Ähnliches. Hierdurch wird eine asymmetrische Öffnung des Strömungskanals erreicht, wodurch plötzlichen Strömungsverlagerungen entgegengewirkt werden kann.

Alternativ ist es möglich, dass die Erweiterungsposition zweier einander gegenüberliegender seitlicher Umfangsabschnitte stromaufwärts von der Erweiterungsposition des oberen Umfangsabschnitts gelegen ist, wobei die Erweiterungspositionen und/oder wobei jeweilige Längen einer Erstreckung in Umfangsrichtung der seitlichen Umfangsabschnitte voneinander verschieden sind. Die seitlichen Umfangsabschnitte sind somit asymmetrisch zueinander ausgebildet. Hierdurch wird eine asymmetrische Öffnung des Strömungskanals und somit eine asymmetrische Strömung im Bereich des Reflexionselements erreicht, was plötzlichen Strömungsverlagerungen entgegenwirkt. Eine entsprechende Asymmetrie kann beispielsweise dadurch erreicht werden, dass in einem Messrohr zwei seitlich gegenüberliegende Ausnehmungen vorgesehen sind, die sich in ihrer Breite in Umfangsrichtung und/oder in ihrer Tiefe in Strömungsrichtung voneinander unterscheiden.

In einer weiteren alternativen Ausführungsform ist es möglich, dass die Erweiterungspositionen des seitlichen und des unteren Umfangsabschnitts gleich sind. Beispielsweise kann ein Messrohr vorgesehen sein, das den Messbereich ausbildet und das im oberen Bereich, das heißt an der dem Ultraschallwandler zugewandten Seite, verlängert ist, also beispielsweise eine Art Lasche aufweist. Diese Ausbildung des Ultraschallzählers ermöglicht eine relativ frühe Öffnung des Strömungskanals, wodurch ein Strömungswiderstand reduziert werden kann und sowohl seitliche Staueffekte als auch Staueffekte unterhalb des Reflexionselements vermieden werden können. Gleichzeitig wird für jenen Strömungsteil, der zwischen dem Reflexionselement und dem Ultraschallwandler hindurchgeführt wird und der die Messung beeinflusst, eine Strömungsführung durch diese Lasche bzw. die späte Erweiterung im oberen Umfangsabschnitt erreicht, wodurch eine Beeinflussung der Strömung durch Freistrahleffekte reduziert wird.

In wenigstens einem der Umfangsabschnitte kann wenigstens ein sich in Strömungsrichtung erstreckender Steg angeordnet sein, der sich über die jeweilige Erweiterungsposition als Verlängerung der Seitenwand des Messbereichs hinaus erstreckt. Hierbei kann eine der Mittelgerade zugewandte Seite des Stegs den gleichen Abstand von der Mittelgerade aufweisen wie die Seitenwand im jeweiligen Umfangsabschnitt stromaufwärts der Erweiterungsposition bzw. der Steg kann die Seitenwand über die Erweiterungsposition hinaus geradlinig fortsetzen. Bei einer Nutzung eines Messrohrs zur Ausbildung des Messbereichs kann dies beispielsweise dadurch realisiert werden, dass wenigstens ein Steg über das Rohrende in dem Umfangsabschnitt hinaussteht. Beispielsweise kann eine Ausnehmung im seitlichen oder unteren Umfangsabschnitt wenigstens einen Steg aufweisen. Dieser kann sich bis zu dem längsten Abschnitt des Rohrs, insbesondere im oberen Umfangsabschnitt, erstrecken, er kann jedoch auch kürzer sein. Entsprechende Stege können die Strömung im Übergangsbereich verwirbeln und somit plötzlichen Strömungsumschlägen entgegenwirken.

Das Reflexionselement kann über wenigstens einen Haltesteg an einem Umfangsabschnitt des Übergangsbereichs, dessen Erweiterungspositionen in Strömungsrichtung gleichweit oder weiter stromabwärts gelegen ist, als die Erweiterungspositionen aller weiteren Umfangsabschnitte des Übergangsbereichs, oder an einem stromabwärts zu diesem Umfangsabschnitt benachbart gelegenen Abschnitt der Seitenwand des Strömungskanals gehaltert sein. Insbesondere kann wenigstens ein bzw. können vorzugsweise zwei Haltestege jeweils im oberen und/oder im unteren Umfangsabschnitt vorgesehen sein. Dies ermöglicht eine gezielte Führung der Strömung im Bereich der Haltestege, womit diese je nach konkreter Anordnung zur gezielten Verwirbelung der Strömung genutzt werden können oder eine entsprechende Verwirbelung verringert werden kann.

Der Strömungsquerschnitt in dem Messbereich kann sich in Strömungsrichtung kontinuierlich verkleinern, um die Strömungsgeschwindigkeit des Fluids kontinuierlich zu erhöhen. Durch eine derartige kontinuierliche Beschleunigung des Fluids kann die Strömung stabilisiert werden und plötzliche Strömungsumschläge können hierdurch unterdrückt werden. Die Wandsteigung zur Verkleinerung der Strömungsquerschnitte kann zwischen 0,5°, insbesondere 0,7°, und 2°, insbesondere 1°, liegen. Bei einer typischen Länge des Messbereichs von 50 - 60 mm ändert sich somit der Abstand der jeweiligen Seitenwand zu der Mittelgerade ungefähr um 0,5 - 2 mm. Die erläuterte Verengung des Strömungsquerschnitts kann, insbesondere wenn eine im Wesentlichen konische Form des Messbereichs bzw. des Messrohrs genutzt wird, auch eine Entformung der den Messbereich bildenden Komponente, insbesondere des Messrohrs, bei einer Nutzung von Spritzguss zur Herstellung erleichtern.

Im erfindungsgemäßen Ultraschallzähler ist es möglich, dass die Seitenwand zumindest in dem Messbereich in Umfangsrichtung gewellt ausgebildet ist. Der Strömungsquerschnitt im Messbereich weist somit Taschen auf, das heißt er bildet keine konvexe Fläche. Eine Wellung der Seitenwand bricht eine Rotationssymmetrie der Strömung, was dazu beitragen kann, plötzliche Umschläge der Strömungsführung zu unterdrücken. Bei einer gewellten Seitenwand variiert der Abstand zwischen der Seitenwand und der Mittelgerade entlang der Umfangsrichtung. Der Abstand kann vorzugsweise periodisch zwischen einem Maximum und einem Minimum variieren.

Weitere Vorteile und Einzelheiten der Erfindung ergeben sich aus den folgenden Ausführungsbeispielen und den zugehörigen Zeichnungen. Dabei zeigen:
- Fig. 1 und 2: unterschiedliche geschnittene Ansichten eines Ausführungsbeispiels eines erfindungsgemäßen Ultraschallzählers,
- Fig. 3: eine geschnittene Detailansicht eines weiteren Ausführungsbeispiels eines erfindungsgemäßen Ultraschallzählers,
- Fig. 4 - 7: verschiedene Messrohre verschiedener weiterer Ausführungsbeispiele eines erfindungsgemäßen Ultraschallzählers, und
- Fig. 8: ein weiteres Ausführungsbeispiel eines erfindungsgemäßen Ultraschallzählers.

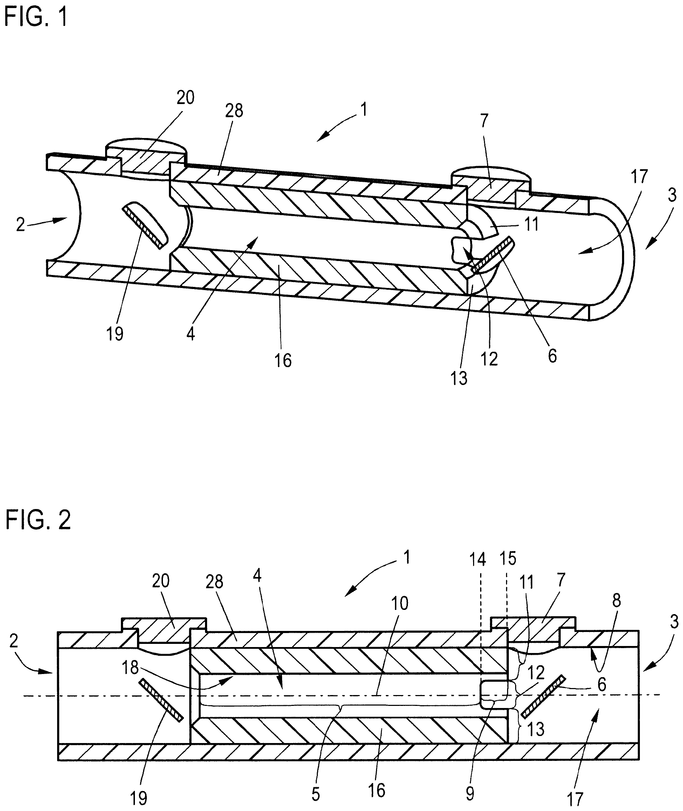

Figuren 1 und 2 zeigen geschnittene Ansichten eines Ultraschallzählers 1 zur Erfassung einer Durchflussmenge eines Fluids. Hierbei zeigen beide Figuren den gleichen Schnitt, wobei Fig. 1 eine Schrägansicht zeigt, um die Erstreckung der Komponenten des Ultraschallzählers 1 senkrecht zur Bildebene der Fig. 2 darzustellen.

Der Ultraschallzähler 1 weist einen Fluideinlass 2, einen Fluidauslass 3 und einen den Fluideinlass 2 mit dem Fluidauslass 3 verbindenden Strömungskanal 4 auf. Der Strömungskanal 4 umfasst einen Messbereich 5, der sich geradlinig in eine Strömungsrichtung erstreckt, in der das Fluid durch den Ultraschallzähler 1 geführt wird. Zwischen dem Messbereich 5 und dem Fluidauslass 3 ist ein von dem Fluid umströmbares Reflexionselement 6 angeordnet, durch das ein Ultraschallsignal von einem Ultraschallwandler 7, der an einer den Strömungsquerschnitt des Strömungskanals 4 begrenzenden Seitenwand 8, 18 angeordnet ist, in den Messbereich 5 reflektierbar ist oder umgekehrt. Fluideinlassseitig ist ein weiteres Reflexionselement 19 vorgesehen, durch das ein Ultraschallsignal von bzw. zu dem Ultraschallwandler 20 reflektierbar ist. Die Geschwindigkeit des durch den Messbereich 4 fließenden Fluids kann erfasst werden, indem ein Ultraschallsignal durch den weiteren Ultraschallwandler 20 ausgesendet und über das weitere Reflexionselement 19 im Wesentlichen parallel zur Strömungsrichtung in den Messbereich 5 reflektiert wird. Nach dem Durchlaufen des Messbereichs 5 wird es über das Reflexionselement 6 zu dem Ultraschallwandler 7 geführt und dort empfangen. Ein Durchfluss lässt sich beispielsweise aus der Signallaufzeit oder aus einer Frequenzverschiebung ermitteln. Alternativ wäre es möglich, das Ultraschallsignal durch den Ultraschallwandler 7 auszusenden und durch den weiteren Ultraschallwandler 20 zu empfangen.

Um höhere Strömungsgeschwindigkeiten im Messbereich 5 zu erreichen und somit die Messqualität der Durchflussmessung zu verbessern, ist der Strömungsquerschnitt im Messbereich 5 verengt. Dies erfolgt im Ausführungsbeispiel gemäß der Figuren 1 und 2 dadurch, dass in ein Gehäuse 28, das rohrförmig ausgebildet ist und im Bereich des Fluideinlasses 2 und des Fluidauslasses 3 die den Strömungsquerschnitt des Strömungskanals 4 begrenzenden Seitenwände 8 ausbildet, ein Messrohr 16 eingefügt ist. Dieses bildet in dem Messbereich 5 die den Strömungsquerschnitt des Strömungskanals 4 begrenzende Seitenwand 18. In dem im Folgenden noch detailliert erläuterten Übergangsbereichen 9 werden die Seitenwände 8, 18 zum Teil durch das Messrohr 16 und zum Teil durch das Gehäuse 28 gebildet.

Bei der gezeigten Messgeometrie trifft die Fluidströmung nach dem Durchlaufen des Messbereichs 5 auf das Reflexionselement 6 und wird in mehrere Teilströmungen aufgeteilt, die an den verschiedenen Seiten des Reflexionselements 6 vorbeigeführt werden. Jener Anteil der Strömung, der über das Reflexionselement 6 geführt wird, also zwischen dem Reflexionselement 6 und dem Ultraschallwandler 7 hindurch, beeinflusst hierbei die Messung der Strömungsgeschwindigkeit und somit des Durchflusses, da er in dem Pfad des Ultraschallsignals liegt. Die anderen Strömungsteile beeinflussen diese Messung nicht. Hierbei kann das Problem auftreten, dass es bei bestimmten Durchflussmengen zu plötzlichen Umschlägen der Strömungsverteilung aufgrund von Staueffekten kommt. Um dies zu vermeiden, ist der Übergangsbereich 9 vorgesehen, der in Umfangsrichtung des Strömungskanals 4 mehrere Umfangsabschnitte 11, 12, 13 aufweist, in denen eine Vergrößerung des Abstands zwischen der Mittelgerade 10 und der Seitenwand 8, 18 an in Axialrichtung voneinander beabstandeten unterschiedlichen Erweiterungspositionen 14, 15 erfolgt. Dies ist dadurch realisiert, dass in dem Messrohr 16 eine Ausnehmung in dem Umfangsabschnitt 12, also in Strömungsrichtung betrachtet in der linken Seitenwand, vorgesehen ist. Der Übergangsbereich 9 ist somit als Stufendiffusor ausgebildet, in dem sich der Strömungsquerschnitt des Strömungskanals 4 in zwei in Strömungsrichtung aufeinanderfolgenden Stufen vergrößert, wobei die einzelnen Stufen durch eine Vergrößerung des Abstands zwischen der Mittelgerade 10 und der Seitenwand 8, 18 gebildet werden. Die Vergrößerung des Abstandes erfolgt für den Umfangsabschnitt 12 an der Erweiterungsposition 14 und für die Umfangsabschnitte 11, 13 an der Erweiterungsposition 15. Die Änderung der Erweiterungsposition 14, 15 zwischen den einzelnen Umfangsabschnitten 11, 12, 13 erfolgt sprunghaft. Nicht erfindungsgemäß wäre alternativ eine kontinuierliche Änderung möglich.

Durch das Vorsehen der Ausnehmung im Messrohr 16 im Umfangsabschnitt 12 wird der Strömungsquerschnitt asymmetrisch erweitert, wodurch einerseits erreicht wird, dass das Reflexionselement 6 leicht umströmt werden kann, wobei die Strömung weiterhin über weite Bereiche ihres Umfangs durch das Messrohr 16 geführt ist, das heißt es werden Freistrahleffekte vermieden, andererseits wird durch die asymmetrische Strömungsführung erreicht, dass plötzliche Umschläge der Strömungsverteilung zum Umströmen des Reflexionselements 6 unterdrückt werden können, womit die vorangehenden erläuterten plötzlichen Messwertänderungen unterdrückt werden können.

Unter Umständen kann es gewünscht sein, diesen Effekt zu verstärken, indem das Fluid im Bereich des Umfangsabschnitts 12 zusätzlich verwirbelt wird. Dies kann beispielsweise dadurch erreicht werden, dass die Ausnehmung in diesem Bereich nicht den ganzen jeweiligen Umfangsabschnitt umfasst, sondern dass nicht gezeigte Stege des Messrohrs 16 stehenbleiben, zwischen denen das Fluid hindurchgeführt wird.

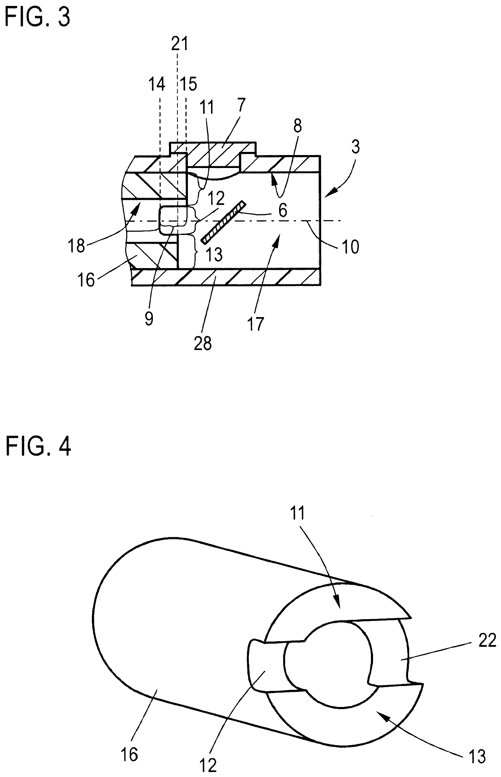

In Abhängigkeit der konkreten Anforderungen an den Ultraschallzähler 1 kann die grundsätzliche Idee, den Strömungsquerschnitt in unterschiedlichen Umfangsabschnitten 11, 12, 13 an unterschiedlichen Erweiterungspositionen 14, 15 zu erweitern, in verschiedenen Varianten umgesetzt werden, von denen einige im Folgenden mit Bezug auf die Figuren 3 - 7 erläutert werden. Hierbei werden einander entsprechende Gegenstände mit den gleichen Bezugszeichen bezeichnet.

Fig. 3 zeigt eine Detailansicht eines weiteren Ausführungsbeispiels eines Ultraschallzählers 1. Der wesentliche Unterschied zu dem in Fig. 1 gezeigten Ultraschallzähler 1 ist hierbei, dass nicht nur der seitliche Umfangsabschnitt 12 sondern auch der untere Umfangsabschnitt 13 eine Erweiterungsposition 14, 21 aufweist, die stromaufwärts der Erweiterungsposition 15 des oberen Umfangsabschnitts 11 liegt. Es wird somit ein Stufendiffusor mit einer zusätzlichen Stufe realisiert, wobei die Asymmetrie der Strömungsführung weiter aufgebrochen wird.

Fig. 4 zeigt ein Messrohr 16, durch dessen Nutzung im Ultraschallzähler 1 eine geringfügige andere Strömungsführung erreicht werden kann. Im Unterschied zu dem in Fig. 1 und 2 gezeigten Messrohr 16 ist bei dem in Fig. 4 gezeigten Messrohr 16 vorgesehen, dass in zwei einander gegenüberliegenden seitlichen Umfangsabschnitten 12, 22 jeweils eine Ausnehmung vorgesehen ist, das heißt eine Erweiterung an einer Erweiterungsposition erfolgt, die vor dem Rohrende in dem oberen und unteren Umfangsabschnitt 11, 13 liegt. Durch dieses beidseitige Öffnen des Strömungsquerschnitts kann das Reflexionselement 6 mit geringerem Strömungswiderstand umströmt werden. Um dennoch eine asymmetrische Strömungsverteilung und somit eine hohe Stabilität gegen plötzliche Strömungsumschläge zu erreichen, sind die Ausnehmungen in den Umfangsabschnitten 12, 22 unterschiedlich ausgebildet, wobei die jeweiligen Längen der Erstreckung der seitlichen Umfangsabschnitte 12, 22 in Umfangsrichtung voneinander verschieden sind. Alternativ oder ergänzend wäre es möglich, die Einschnitte unterschiedlich tief zu gestalten, das heißt unterschiedliche Erweiterungspositionen für die Umfangsabschnitte 12, 22 zu nutzen.

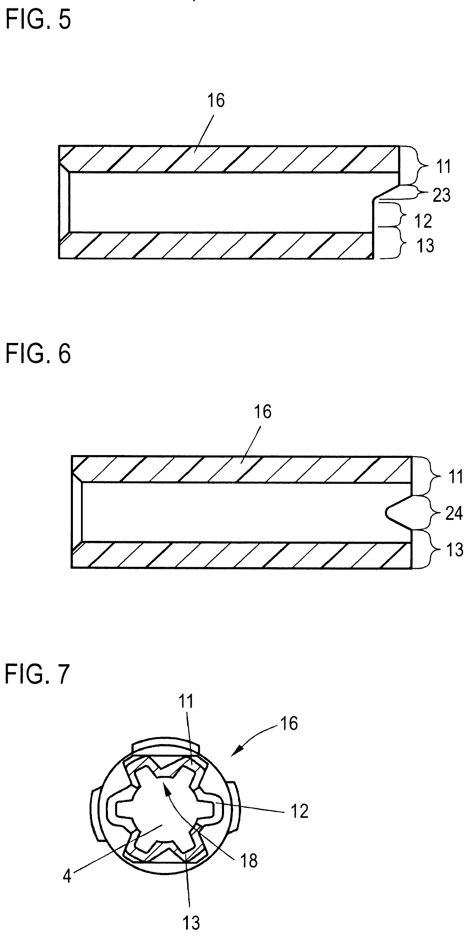

Das in Fig. 5 gezeigte Messrohr 16 endet in den seitlichen und unteren Umfangsabschnitten 12, 13 an der gleichen Erweiterungsposition, die stromaufwärts der Erweiterungsposition im oberen Umfangsabschnitt 11 liegt. Hierdurch wird der für die Messung besonders relevante Anteil der Strömung, der weitgehend zwischen dem Reflexionselement 6 und dem Ultraschallwandler 7 hindurchgeführt wird, bis nahe an das Reflexionselement 6 herangeführt. Gleichzeitig ermöglicht die frühere Öffnung des Strömungsquerschnitts in den Umfangsabschnitten 12, 13 ein Ausweichen der Strömung zur Unterdrückung von Staueffekten. Die Erweiterungsposition ändert sich zwischen einem oberen Umfangsabschnitt 11 und den seitlichen Umfangsabschnitten 12 über einen Übergangsbereich 23 kontinuierlich.

In den bislang gezeigten Ausführungsbeispielen wurde, abgesehen von dem Übergangsbereich 23, jeweils eine über einen Umfangsabschnitt konstante Erweiterungsposition genutzt. Dies ist nicht notwendig erforderlich. Beispielsweise weist das in Fig. 6 gezeigte Messrohr 16 einen seitlichen Umfangsabschnitt 24 mit einer konischen Aussparung auf, durch die sich die Erweiterungsposition innerhalb des Umfangsabschnitts 24 kontinuierlich ändert.

Die bisherigen Ausführungsbeispiele gehen von im Wesentlichen zylinderförmigen, unter Umständen leicht konisch geformten, Messbereichen aus. Auch dies ist nicht notwendig erforderlich. Beispielsweise zeigt Fig. 7 eine nahe am fluidauslassseitigen Ende eines Messrohrs 16 geschnittene Ansicht des Messrohrs 16, bei der die Seitenwand 18 des Strömungskanals 4 im Messbereich 5 gewellt ist. Hierdurch kann eine Rotationssymmetrie des Strömungsquerschnitts gebrochen werden, was dazu beitragen kann, plötzliche Strömungsumschläge zu unterdrücken. Wie in Fig. 7 zu erkennen ist, endet das Messrohr 16 fluidauslassseitig in seitlichen Umfangsabschnitten 12 früher als in oberen und unteren Umfangsabschnitten 11, 13, womit für die verschiedenen Umfangsabschnitte 11, 12, 13 unterschiedliche Erweiterungspositionen realisiert werden.

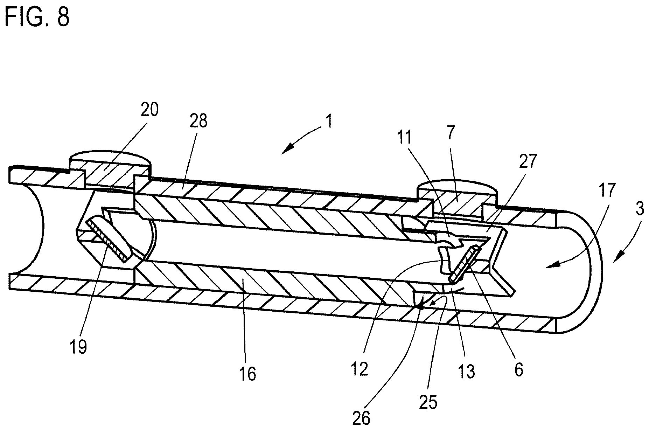

Fig. 8 zeigt ein weiteres Ausführungsbeispiel eines Ultraschallzählers 1. Dieses entspricht in vielen Punkten dem in den Figuren 1 und 2 dargestellten Ultraschallzähler 1, weshalb im Folgenden ausschließlich die Unterschiede erläutert werden sollen. Das Messrohr 16 ist derart ausgebildet, dass seine Wandstärke an einem fluidauslassseitigen Ende des Messrohres 16 abnimmt, so dass die Außenfläche 26 des Messrohres 16 von einer Innenfläche 25 des das Auslassrohr 17 bildenden Gehäuses 28 beabstandet ist. Hierdurch wird eine Hinterspülung des fluidauslassseitigen Endes des Messrohrs 16 ermöglicht, was aus strömungstechnischer Sicht vorteilhaft sein kann.

Fig. 8 zeigt zudem eine konkrete Möglichkeit zur Befestigung des Reflexionselements 6. Das Reflexionselement 6 ist durch Haltestege 27 gehaltert, die an einem oberen und unteren Umfangsabschnitt 11, 13 des Übergangsbereichs 9 angeordnet sind. Sie sind somit an Umfangsabschnitten 11, 13 angeordnet, die eine weitest stromabwärts gelegte Erweiterungsposition aufweisen, womit das strömende Fluid im Bereich der Haltestege 27 möglichst nah an das Reflexionselement 6 herangeführt werden kann. Dies ermöglicht eine robuste Kontrolle der Interaktion der geführten Strömung mit den Haltestegen 27, die in Abhängigkeit der konkreten Strömungserfordernisse angepasst werden kann.

### Bezugszeichenliste

- 1: Ultraschallzähler
- 2: Fluideinlass
- 3: Fluidauslass
- 4: Strömungskanal
- 5: Messbereich
- 6: Reflexionselement
- 7: Ultraschallwandler
- 8: Seitenwand
- 9: Übergangsbereich
- 10: Mittelgerade
- 11: Umfangsabschnitt
- 12: Umfangsabschnitt
- 13: Umfangsabschnitt
- 14: Erweiterungsposition
- 15: Erweiterungsposition
- 16: Messrohr
- 17: Auslassrohr
- 18: Seitenwand
- 19: Reflexionselement
- 20: Ultraschallwandler
- 21: Erweiterungsposition
- 22: Umfangsabschnitt
- 23: Übergangsabschnitt
- 24: Umfangsabschnitt
- 25: Innenfläche
- 26: Außenfläche
- 27: Haltesteg
- 28: Gehäuse

## Patentansprüche

1. Ultraschallzähler zur Erfassung einer Durchflussmenge eines Fluids mit einem Fluideinlass (2), einem Fluidauslass (3) und einem den Fluideinlass (2) mit dem Fluidauslass (3) verbindenden Strömungskanal (4), wobei der Strömungskanal (4) einen Messbereich (5) aufweist, der sich geradlinig in eine Strömungsrichtung erstreckt, wobei zwischen dem Messbereich (5) und dem Fluidauslass (3) ein von dem Fluid umströmbares Reflexionselement (6) angeordnet ist, durch das ein Ultraschallsignal von einem Ultraschallwandler (7), der an einer den Strömungsquerschnitt des Strömungskanals (4) begrenzenden Seitenwand (8, 18) angeordneten ist, in den Messbereich (5) reflektierbar ist oder umgekehrt, wobei zwischen dem Messbereich (5) und dem Reflexionselement (6) ein Übergangsbereich (9) des Strömungskanals (4) angeordnet ist, in dem sich ein Abstand zwischen einer in die Strömungsrichtung verlaufenden Mittelgerade (10) des Messbereichs (5) und der Seitenwand (8, 18) stufenweise vergrößert, wobei der Übergangsbereich (9) in Umfangsrichtung des Strömungskanals (4) mehrere Umfangsabschnitte (11, 12, 13, 22, 23, 24) aufweist, in denen die Vergrößerung des Abstands zwischen der Mittelgerade (10) und der Seitenwand (8, 18) an in Strömungsrichtung betrachtet voneinander unterschiedlichen Erweiterungspositionen (14, 15, 21) erfolgt oder beginnt, wobei der Übergangsbereich (9) als Stufendiffusor ausgebildet ist, in dem sich der Strömungsquerschnitt des Strömungskanals (4) in mehreren in Strömungsrichtung aufeinanderfolgenden Stufen vergrößert, wobei die einzelnen Stufen durch die Vergrößerung des Abstands zwischen der Mittelgerade (10) und der Seitenwand (8, 18) in jeweils einem Umfangsabschnitt (11, 12, 13, 22, 23, 24) oder in einem Teil der Unterabschnitte (11, 12, 13, 22, 23, 24) an einer jeweiligen der Erweiterungspositionen (14, 15, 21) gebildet werden.

2. Ultraschallzähler nach Anspruch 1, **dadurch gekennzeichnet, dass** die Seitenwand in dem Messbereich (5) durch ein Messrohr (16) gebildet wird, dessen fluidauslassseitiges Ende in ein Auslassrohr (17) mündet, in dem das Reflexionselement (6) angeordnet ist, wobei die Seitenwand (18) des Messrohres (16) in den Umfangsabschnitten (11, 12, 13, 22, 23, 24) des Übergangsbereichs (9) an der jeweiligen Erweiterungsposition (14, 15, 21) endet, womit der Strömungsquerschnitt in den einzelnen Umfangsabschnitten (11, 12, 13, 22, 23, 24) jeweils vor der Erweiterungsposition (14, 15, 21) durch die Seitenwand (18) des Messrohres (16) und nach der Erweiterungsposition (14, 15, 21) durch die Seitenwand (8) des Auslassrohres (17) begrenzt ist.

3. Ultraschallzähler nach Anspruch 2, **dadurch gekennzeichnet, dass** eine Außenfläche (26) des fluidauslassseitigen Endes des Messrohres (16) von einer Innenfläche (25) des Auslassrohres (17) beabstandet ist.

4. Ultraschallzähler nach einem der vorangehenden Ansprüche, **dadurch gekennzeichnet, dass** die Erweiterungsposition (15) eines oberen Umfangsabschnitts (11), der an der gleichen Seite des Strömungskanals (4) wie der Ultraschallwandler (7) angeordnet ist, in Strömungsrichtung stromabwärts von der Erweiterungsposition (14, 21) eines unteren Umfangsabschnitts (13), der dem oberen Umfangsabschnitt (11) gegenüberliegend angeordnet ist, und/oder wenigstens eines seitlichen Umfangsabschnitts (12, 22, 24), der zwischen dem oberen und dem unteren Umfangsabschnitt (11, 13) angeordneten ist, gelegen ist.

5. Ultraschallzähler nach Anspruch 4, **dadurch gekennzeichnet, dass** die Veränderung der Erweiterungsposition (14, 15, 21) in Umfangsrichtung zwischen dem oberen und dem seitlichen und/oder zwischen dem seitlichen und dem unteren Umfangsabschnitt (11, 12, 13, 22, 24) sprunghaft über einen zwischen den jeweiligen Umfangsabschnitten angeordneten Übergangsabschnitt (23) erfolgt.

6. Ultraschallzähler nach Anspruch 4 oder 5, **dadurch gekennzeichnet, dass** die Erweiterungsposition (14) genau eines seitlichen Umfangsabschnitts (12, 22, 24) stromaufwärts von der Erweiterungsposition (15) des oberen Umfangsabschnitts (11) gelegen ist.

7. Ultraschallzähler nach Anspruch 4 oder 5, **dadurch gekennzeichnet, dass** die Erweiterungsposition (14) zweier einander gegenüberliegender seitlicher Umfangsabschnitte (12, 22) stromaufwärts von der Erweiterungsposition (15) des oberen Umfangsabschnitts (11) gelegen ist, wobei die Erweiterungspositionen und/oder wobei jeweilige Längen einer Erstreckung in Umfangsrichtung der seitlichen Umfangsabschnitte (12, 22) voneinander verschieden sind.

8. Ultraschallzähler nach einem der Ansprüche 4 oder 5, **dadurch gekennzeichnet, dass** die Erweiterungspositionen (14, 21) des seitlichen und des unteren Umfangsabschnitts (12, 13, 22, 24) gleich sind.

9. Ultraschallzähler nach einem der vorangehenden Ansprüche, **dadurch gekennzeichnet, dass** in wenigstens einem der Umfangsabschnitte (11, 12, 13, 22, 23, 24) wenigstens ein sich in Strömungsrichtung erstreckender Steg angeordnet ist, der sich über die jeweilige Erweiterungsposition (14, 15, 21) als Verlängerung der Seitenwand (18) des Messbereichs (5) hinaus erstreckt.

10. Ultraschallzähler nach einem der vorangehenden Ansprüche, **dadurch gekennzeichnet, dass** das Reflexionselement (6) über wenigstens einen Haltesteg (27) an wenigstens einem Umfangsabschnitt (11, 13) des Übergangsbereichs, dessen Erweiterungsposition (15) in Strömungsrichtung gleichweit oder weiter stromabwärts gelegen ist als die Erweiterungspositionen (14) aller weiteren Umfangsabschnitte (12) des Übergangsbereichs, oder an einem stromabwärts zu diesem Umfangsabschnitt benachbart gelegenen Abschnitt der Seitenwand (8, 18) des Strömungskanals (4) gehaltert ist.

11. Ultraschallzähler nach einem der vorangehenden Ansprüche, **dadurch gekennzeichnet, dass** sich der Strömungsquerschnitt in dem Messbereich (5) in Strömungsrichtung kontinuierlich verkleinert, um die Strömungsgeschwindigkeit des Fluids kontinuierlich zu erhöhen.

12. Ultraschallzähler nach einem der vorangehenden Ansprüche, **dadurch gekennzeichnet, dass** die Seitenwand (8, 18) zumindest in dem Messbereich (5) in Umfangsrichtung gewellt ausgebildet ist.

## Claims

1. Ultrasonic meter for recording a through-flow rate of a fluid, having a fluid inlet (2), having a fluid outlet (3), and having a flow channel (4) which connects the fluid inlet (2) to the fluid outlet (3), wherein the flow channel (4) has a measurement region (5) which extends in a straight line in a flow direction, wherein, between the measurement region (5) and the fluid outlet (3), there is arranged a reflection element (6) which can be flowed around by the fluid and by way of which an ultrasonic signal from an ultrasonic transducer (7), which is arranged on a side wall (8, 18) delimiting the flow cross section of the flow channel (4), can be reflected into the measurement region (5) or vice versa, wherein, between the measurement region (5) and the reflection element (6), there is arranged a changeover region (9) of the flow channel (4), in which changeover region a spacing between a central straight line (10), running in the flow direction, of the measurement region (5) and the side wall (8, 18) enlarges in a stepwise manner, wherein the changeover region (9) has, in the circumferential direction of the flow channel (4), several circumferential sections (11, 12, 13, 22, 23, 24) in which the enlargement of the spacing between the central straight line (10) and the side wall (8, 18) takes place or begins at expansion positions (14, 15, 21) which, as viewed in the flow direction, differ from one another, wherein the changeover region (9) is formed as a step diffuser in which the flow cross section of the flow channel (4) increases in size in several steps which follow one another in the flow direction, wherein the individual steps are formed by the enlargement of the spacing between the central straight line (10) and the side wall (8, 18) in one circumferential section (11, 12, 13, 22, 23, 24) in each case or in part of the subsections (11, 12, 13, 22, 23, 24) at a respective one of the expansion positions (14, 15, 21).

2. Ultrasonic meter according to Claim 1, **characterized in that** the side wall in the measurement region (5) is formed by a measurement tube (16), the fluid-outlet-side end of which opens into an outlet tube (17) in which the reflection element (6) is arranged, wherein the side wall (18) of the measurement tube (16) ends in the circumferential sections (11, 12, 13, 22, 23, 24) of the changeover region (9) at the respective expansion position (14, 15, 21), whereby the flow cross section in the individual circumferential sections (11, 12, 13, 22, 23, 24) is in each case delimited upstream of the expansion position (14, 15, 21) by the side wall (18) of the measurement tube (16) and downstream of the expansion position (14, 15, 21) by the side wall (8) of the outlet tube (17).

3. Ultrasonic meter according to Claim 2, **characterized in that** an outer surface (26) of the fluid-outlet-side end of the measurement tube (16) is spaced apart from an inner surface (25) of the outlet tube (17).

4. Ultrasonic meter according to one of the preceding claims, **characterized in that** the expansion position (15) of an upper circumferential section (11) that is arranged on the same side of the flow channel (4) as the ultrasonic transducer (7) is situated downstream, in the flow direction, of the expansion position (14, 21) of a lower circumferential section (13) that is arranged opposite the upper circumferential section (11), and/or of at least one lateral circumferential section (12, 22, 24) that is arranged between the upper and the lower circumferential section (11, 13).

5. Ultrasonic meter according to Claim 4, **characterized in that** the change of the expansion position (14, 15, 21) in the circumferential direction between the upper and the lateral and/or between the lateral and the lower circumferential section (11, 12, 13, 22, 24) takes place in an abrupt manner via a changeover section (23) arranged between the respective circumferential sections.

6. Ultrasonic meter according to Claim 4 or 5, **characterized in that** the expansion position (14) of exactly one lateral circumferential section (12, 22, 24) is situated upstream of the expansion position (15) of the upper circumferential section (11).

7. Ultrasonic meter according to Claim 4 or 5, **characterized in that** the expansion position (14) of two lateral circumferential sections (12, 22) positioned opposite one another is situated upstream of the expansion position (15) of the upper circumferential section (11), wherein the expansion positions and/or wherein respective lengths of an extent in the circumferential direction of the lateral circumferential sections (12, 22) differ from one another.

8. Ultrasonic meter according to either of Claims 4 and 5, **characterized in that** the expansion positions (14, 21) of the lateral and of the lower circumferential section (12, 13, 22, 24) are the same.

9. Ultrasonic meter according to one of the preceding claims, **characterized in that** at least one web which extends in the flow direction and which extends beyond the respective expansion position (14, 15, 21) as an extension of the side wall (18) of the measurement region (5) is arranged in at least one of the circumferential sections (11, 12, 13, 22, 23, 24).

10. Ultrasonic meter according to one of the preceding claims, **characterized in that** the reflection element (6) is held via at least one retaining web (27) at at least one circumferential section (11, 13) of the changeover region, the expansion position (15) of which in the flow direction is situated equally as far as, or further downstream than, the expansion positions (14) of all further circumferential sections (12) of the changeover region, or is held at a section, situated adjacently downstream of said circumferential section, of the side wall (8, 18) of the flow channel (4).

11. Ultrasonic meter according to one of the preceding claims, **characterized in that** the flow cross section in the measurement region (5) continuously decreases in size in the flow direction in order to continuously increase the flow speed of the fluid.

12. Ultrasonic meter according to one of the preceding claims, **characterized in that** the side wall (8, 18), at least in the measurement region (5), is formed in an undulating manner in the circumferential direction.

## Revendications

1. Compteur à ultrasons destiné à mesurer le débit d'un fluide avec une entrée de fluide (2), une sortie de fluide (3) et un canal d'écoulement (4) reliant l'entrée de fluide (2) à la sortie de fluide (3), dans lequel le canal d'écoulement (4) présente une zone de mesure (5) qui s'étend en ligne droite dans une direction d'écoulement, dans lequel un élément de réflexion (6) pouvant être balayé par le fluide est disposé entre la zone de mesure (5) et la sortie de fluide (3), par lequel un signal ultrasonore provenant d'un transducteur à ultrasons (7), qui est disposé sur une paroi latérale (8, 18) limitant la section transversale d'écoulement du canal d'écoulement (4), peut être réfléchi dans la zone de mesure (5) ou inversement, dans lequel une zone de transition (9) du canal d'écoulement (4) est disposée entre la zone de mesure (5) et l'élément de réflexion (6), dans laquelle une distance entre une droite centrale (10) de la zone de mesure (5) s'étendant dans la direction d'écoulement et la paroi latérale (8, 18) augmente de façon étagée, dans lequel la zone de transition (9) présente dans la direction périphérique du canal d'écoulement (4) plusieurs parties périphériques (11, 12, 13, 22, 23, 24), dans lesquelles l'augmentation de la distance entre la droite centrale (10) et la paroi latérale (8, 18) se produit ou commence, en considérant la direction d'écoulement, à des positions d'élargissement différentes l'une de l'autre (14, 15, 21), dans lequel la zone de transition (9) est formée par un diffuseur étagé, dans lequel la section transversale d'écoulement du canal d'écoulement (4) augmente en plusieurs étages se succédant dans la direction d'écoulement, dans lequel les étages individuels sont formés par l'augmentation de la distance entre la droite centrale (10) et la paroi latérale (8, 18) respectivement dans une partie périphérique (11, 12, 13, 22, 23, 24) ou dans une partie des parties périphériques (11, 12, 13, 22, 23, 24) à une position d'élargissement respective (14, 15, 21).

2. Compteur à ultrasons selon la revendication 1, **caractérisé en ce que** la paroi latérale dans la zone de mesure (5) est formée par un tube de mesure (16), dont l'extrémité côté sortie de fluide débouche dans un tube de sortie (17), dans lequel l'élément de réflexion (6) est disposé, dans lequel la paroi latérale (18) du tube de mesure (16) se termine dans les parties périphériques (11, 12, 13, 22, 23, 24) de la zone de transition (9) à la position d'élargissement respective (14, 15, 21), avec laquelle la section transversale d'écoulement est limitée dans les parties périphériques individuelles (11, 12, 13, 22, 23, 24) respectivement avant la position d'élargissement (14, 15, 21) par la paroi latérale (18) du tube de mesure (16) et après la position d'élargissement (14, 15, 21) par la paroi latérale (8) du tube de sortie (17).

3. Compteur à ultrasons selon la revendication 2, **caractérisé en ce que** la face extérieure (26) de l'extrémité du tube de mesure (16) côté sortie de fluide est espacée d'une face intérieure (25) du tube de sortie (17) .

4. Compteur à ultrasons selon l'une quelconque des revendications précédentes, **caractérisé en ce que** la position d'élargissement (15) d'une partie périphérique supérieure (11), qui est disposée sur le même côté du canal d'écoulement (4) que le transducteur à ultrasons (7), est située dans la direction d'écoulement en aval de la position d'élargissement (14, 21) d'une partie périphérique inférieure (13), qui est disposée en face de la partie périphérique supérieure (11), et/ou d'au moins une partie périphérique latérale (12, 22, 24), qui est disposée entre les parties périphériques supérieure et inférieure (11, 13).

5. Compteur à ultrasons selon la revendication 4, **caractérisé en ce que** le changement de la position d'élargissement (14, 15, 21) en direction périphérique entre les parties périphériques supérieure et latérale et/ou entre les parties périphériques latérale et inférieure (11, 12, 13, 22, 24) se produit brusquement par une partie de transition (23) disposée entre les parties périphériques respectives.

6. Compteur à ultrasons selon une revendication 4 ou 5, **caractérisé en ce que** la position d'élargissement (14) d'exactement une partie périphérique latérale (12, 22, 24) est située en amont de la position d'élargissement (15) de la partie périphérique supérieure (11).

7. Compteur à ultrasons selon une revendication 4 ou 5, **caractérisé en ce que** la position d'élargissement (14) de deux parties périphériques latérales opposées l'une à l'autre (12, 22) est située en amont de la position d'élargissement (15) de la partie périphérique supérieure (11), dans lequel les positions d'élargissement et/ou dans lequel les longueurs respectives d'une extension en direction périphérique des parties périphériques latérales (12, 22) sont différentes l'une de l'autre.

8. Compteur à ultrasons selon une des revendications 4 ou 5, **caractérisé en ce que** les positions d'élargissement (14, 21) des parties périphériques latérale et inférieure (12, 13, 22, 24) sont identiques.

9. Compteur à ultrasons selon l'une quelconque des revendications précédentes, **caractérisé en ce qu'**au moins une nervure s'étendant dans la direction d'écoulement est disposée dans au moins une des parties périphériques (11, 12, 13, 22, 23, 24), et s'étend au-delà de la position d'élargissement respective (14, 15, 21) comme prolongement de la paroi latérale (18) de la zone de mesure (5).

10. Compteur à ultrasons selon l'une quelconque des revendications précédentes, **caractérisé en ce que** l'élément de réflexion (6) est supporté par au moins une nervure de maintien (27) sur au moins une partie périphérique (11, 13) de la zone de transition, dont la position d'élargissement (15) est située à la même distance ou plus loin en aval que les positions d'élargissement (14) de toutes les autres parties périphériques (12) de la zone de transition, ou sur une partie de la paroi latérale (8, 18) du canal d'écoulement (4) située en aval à proximité de cette partie périphérique.

11. Compteur à ultrasons selon l'une quelconque des revendications précédentes, **caractérisé en ce que** la section transversale d'écoulement diminue de façon continue dans la zone de mesure (5) dans la direction d'écoulement, afin d'augmenter de façon continue la vitesse d'écoulement du fluide.

12. Compteur à ultrasons selon l'une quelconque des revendications précédentes, **caractérisé en ce que** la paroi latérale (8, 18) est réalisée sous forme ondulée en direction périphérique au moins dans la zone de mesure (5) .
